# EUROPEAN PATENT SPECIFICATION

(11) **EP 3 015 938 B1**
(45) Date of publication and mention of the grant of the patent: **27.04.2022**
(21) Application number: 15180150.3
(22) Date of filing: 07.08.2015
(51) Int. Cl.: G05B 23/02, G05B 15/02

(54) **METHOD AND DEVICE FOR MODE SWITCHING**
VERFAHREN UND VORRICHTUNG ZUR MODUSUMSCHALTUNG
PROCÉDÉ ET DISPOSITIF POUR LA COMMUTATION DE MODE

(30) Priority: 29.10.2014 CN 201410596730
(43) Date of publication of application: 04.05.2016
(73) Proprietor: Xiaomi Inc., Beijing 100085 (CN)
(72) Inventor: Su, Jun, Haidian District Beijing 100085 (CN); Chen, Anju, Haidian District Beijing 100085 (CN); Wang, Yi, Haidian District Beijing 100085 (CN); Yu, Zhuoli, Haidian District Beijing 100085 (CN)
(74) Representative: Sadler, Peter Frederick

(56) References cited:
- JP-A- 2003 302 093
- US-A1- 2002 130 784
- US-A1- 2007 118 638
- US-A1- 2010 070 907
- US-B1- 6 989 731
- "Alen BreatheSmart Air Purifier USER MANUAL", , 31 December 2012 (2012-12-31), XP055249206, Retrieved from the Internet: URL:http://www.sharperimage.com/pdf/manual s/202171.pdf [retrieved on 2016-02-11]

## Description

### TECHNICAL FIELD

The present disclosure relates to the field of automatic control, and more particularly, to a method and a device for mode switching.

### BACKGROUND

With the popularity of a wide variety of household electrical appliances, when using the household electrical appliances, users pay increasingly more attentions on the safety performance of the household electrical appliances.

In related arts, a fan is usually disposed in a household electrical appliance such as an air conditioner, a humidifier and an air purifier or the like. Sometimes, these household electrical appliances become abnormal while being used, but a user may not necessarily find the abnormality in time; and sometimes, the fan will run continuously. Therefore, there are certain potential safety hazards when the user repair these household electrical appliances. At this moment, the user may adjust the operation modes of the household electrical appliances into an off mode manually.

In the process of implementation of the present disclosure, it is found that the above method at least has the following defects:

When a household electrical appliance is abnormal, a user cannot find the abnormality in time, and the process of adjusting the operation mode of the household electrical appliance into the off mode manually is manually controlled. If the user forgets to adjust the operation mode into the off mode, there will still be relatively high potential safety hazards.

US 6989731 describes an electronic device which detects whether a warning status has occurred and if the warning status is not released within a predetermined time, warning information is transmitted to a registered device. If the warning status is not released in spite of transmitting the warning information and if the user is not near the device, warning information and is the user is not near the device, warning information is transmitted to one or more hand-held terminals in an external network according to a predetermined order. If the warning status is released within a predetermined time having elapsed from the transmission of the warning information to the hand-held terminal, warning released information indicating that the warning status has been released is transmitted to the hand-held terminal.

US 2007/0118638 describes a system, device, method, and program for informing abnormality, providing a user with abnormality information of equipment in an easy-to-understand manner so that convenience is enhanced. When abnormality occurs in equipment including home electric appliances, abnormality information indicating abnormality is transmitted to a server through an information terminal, and based on a reply from the server, contents of the abnormality are displayed on the terminal. When the abnormality is eliminated, the abnormality display is removed or displayed on a monitor, etc. are made to inform the elimination of the abnormality.

US 2010/0070907 describes controllers for controlling heating, ventilating, air-conditioning, and cooling (HVAC) systems are provided. The controllers include graphical user interfaces for user adjustment of system settings. The graphical user interfaces also may be designed to present information that facilitates user understanding of system operations. In certain embodiments, the graphical user interfaces may display virtual representations of HVAC systems with graphical elements representing units and/or operating status of the HVAC systems.

JP 20033022093 describes an abnormality detecting method for detecting abnormality of a fan filter unit, when the number of revolutions of the motor driving the fan drops to a value lower than a first lower limit value, control is made to raise the applied voltage to the motor and when the number of revolution of the motor changes to rise it is determined as an abnormality.

### SUMMARY

The invention is defined by the independent claims. Additional features of the invention are provided in the dependent claims. In order to overcome the problems in the related arts that a user cannot find the abnormality of a household electrical appliance in time and relatively high potential safety hazards exist if the user forgets to adjust the operation mode of the household electrical appliance into an off mode, embodiments of the present disclosure provide a method and a device for mode switching. The technical solutions are as follows.

According to a first aspect of embodiments of the present disclosure, there is provided a method for mode switching which is applied in a household electrical appliance connected with an electronic device. The method includes:
establishing a binding relationship between the electronic device and the household electrical appliance in advance, according to an identity of the electronic device and an identity of the household electrical appliance, wherein the identity of the household electrical appliance is determined by the electronic device according to a two-dimensional code identity.

The method further includes:
Detecting, at the household electrical appliance, that a self-operation status is abnormal;
in response to detecting that the operation status is abnormal, switching a current operation mode of the household electrical appliance into a safe mode; and
operating in the safe mode, the safe mode including at least one of powering off a motor in the household electrical appliance, giving an alarm and stopping rotation of a fan in the household electrical appliance; and
sending abnormality information to the bound electronic device, the bound electronic device being configured to display the abnormality information on a display interface of the bound electronic device, and the abnormality information including at least one of an abnormality position, an abnormality problem, abnormality time and an abnormality picture.

The method further includes:
detecting, at the household electrical appliance, whether the abnormality problem prompted by the abnormality information is solved; and
in response to determining that the abnormality problem prompted by the abnormality information is solved, sending abnormality recovery information to the bound electronic device, the bound electronic device being configured to display the abnormality recovery information on the display interface of the electronic device.

The method further includes:
receiving, at the household electrical appliance, an operation recovery signal from the bound electronic device, wherein the household electrical appliance only accepts an operation recovery signal sent by the bound electronic device; and
recovering the operation at the abnormality position according to the operation recovery signal.

In an embodiment, the detecting whether a self-operation status is abnormal includes:
detecting whether a door is opened; and if the door is opened, determining that the household electrical appliance is abnormal;
and/or,
detecting whether a foreign object exists; and if the foreign object exists, determining that the household electrical appliance is abnormal;
and/or,
detecting whether normal operation is obstructed by an external force; and if the door is opened, determining that the household electrical appliance is abnormal;

In an embodiment, the method further includes:
uploading the abnormality information to a server, the server being configured to make statistics of the abnormality information.

In an embodiment, the sending the abnormality information to the bound electronic device includes:
sending the abnormality information to the bound electronic device through a wireless connection established with the bound electronic device;
or,
sending, through a gateway device, the abnormality information to the electronic device belonging to the same LAN with the household electrical appliance;
or,
sending the abnormality information to the bound electronic device through internet.

According to a second aspect of embodiments of the present disclosure, there is provided a method for mode switching which is applied in an electronic device. The method includes:
the electronic device establishing a binding relationship with a household electrical appliance in advance, according to an identity of the electronic device and an identity of the household electrical appliance, wherein the identity of the household electrical appliance is determined by the electronic device according to a two-dimensional code identity.

The method further includes:
The bound electronic device receiving abnormality information sent by a household electrical appliance, the abnormality information being sent by the household electrical appliance after the household electrical appliance detects that a self-operation status of the household electrical appliance is abnormal; and

The bound electronic device displaying the abnormality information on a display interface of the bound electronic device, the abnormality information including at least one of an abnormality position, an abnormality problem, abnormality time and an abnormality picture.

The method further includes:
the bound electronic device receiving abnormality recovery information sent by the household electrical appliance, the abnormality recovery information being sent by the household electrical appliance after the household electrical appliance detects that the abnormality problem is solved; and
the electronic device displaying the abnormality recovery information on the display interface of the bound electronic device.

The method further includes:
the bound electronic device sending an operation recovery signal to the household electrical appliance, the operation recovery signal being configured to instruct the household electrical appliance to recover the operation at the abnormality position, wherein the household electrical appliance only accepts an operation recovery signal sent by the bound electronic device.

In an embodiment, the displaying the abnormality information on the display interface of the bound electronic device includes:
when the abnormality position in the abnormality information is displayed in a block diagram of the household electrical appliance, distinctively displaying the abnormality position and other positions in the block diagram of the household electrical appliance, the distinctive display including at least one of distinctive display via colors, distinctive display via animations and distinctive display via profiles.

In an embodiment, the receiving the abnormality information sent by the household electrical appliance includes:
receiving the abnormality information sent by the household electrical appliance through a wireless connection established with the household electrical appliance;
or,
receiving, through a gateway device, the abnormality information sent by the household electrical appliance belonging to the same LAN with the bound electronic device;
or,
receiving the abnormality information sent by the household electrical appliance through internet.

According to a third aspect of embodiments of the present disclosure, there is provided a system comprising a household electrical appliance and an electronic device. The household electrical appliance comprises:
a first binding module configured to establish a binding relationship with the electronic device, according to an identity of the electronic device and an identity of the household electrical appliance, wherein the identity of the household electrical appliance is determined by an electronic device according to a two-dimensional code identity;
a first detection module configured to detect whether a self-operation status is abnormal;
a mode switching module configured to, when the operation status is abnormal, switch a current operation mode into a safe mode;
a mode operating module configured to operate in the safe mode, the safe mode including at least one of powering off a motor in the household electrical appliance, giving an alarm and stopping rotation of a fan in the household electrical appliance; and
a first sending module configured to, when the household electrical appliance is connected with the bound electronic device, send abnormality information to the bound electronic device for display of the abnormality information on a display interface of the bound electronic device, and the abnormality information including at least one of an abnormality position, an abnormality problem, abnormality time and an abnormality picture.

The household electrical appliance further includes:
a second detection module configured to detect whether the abnormality problem prompted by the abnormality information is solved; and
a second sending module configured to, in response to detecting that the abnormality problem prompted by the abnormality information is solved, send abnormality recovery information to the bound electronic device for display of the abnormality recovery information on the display interface of the bound electronic device.

The household electrical appliance further includes:
a signal receiving module configured to receive an operation recovery signal, from the bound electronic device, wherein the household electrical appliance only accepts an operation recovery signal sent by the bound electronic device; and
an operation recovery module configured to recover the operation at the abnormality position according to the operation recovery signal.

The electronic device of the system of the third aspect comprises:
a second binding module configured to establish a binding relationship with the first binding module of the household electrical appliance, according to an identity of the electronic device and an identity of the household electrical appliance, wherein the identity of the household electrical appliance is determined by the electronic device according to the two-dimensional code identity.
a first receiving module configured to receive abnormality information sent by the household electrical appliance, the abnormality information being sent by the household electrical appliance after the household electrical appliance detects that a self-operation status of the household electrical appliance is abnormal; and
a first display module configured to display the abnormality information on a display interface of the bound electronic device, the abnormality information including at least one of an abnormality position, an abnormality problem, abnormality time and an abnormality picture.

The electronic device further includes:
a second receiving module configured to receive abnormality recovery information sent by the household electrical appliance, the abnormality recovery information being sent by the household electrical appliance after the household electrical appliance detects that the abnormality problem is solved; and
a second display module configured to display the abnormality recovery information on the display interface of the bound electronic device.

The electronic device further includes:
a third sending module configured to send the operation recovery signal to the household electrical appliance, the operation recovery signal being configured to instruct the household electrical appliance to recover the operation at the abnormality position, wherein the household electrical appliance only accepts an operation recovery signal sent by the bound electronic device.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for mode switching according to an exemplary embodiment which does not fall under the invention;
Fig. 2 is a flow chart of a method for mode switching according to another exemplary embodiment which does not fall under the invention;
Fig. 3A is a flow chart of a method for mode switching according to an exemplary embodiment not being part of the present invention;
Fig. 3B is a block diagram of an interface related to an method for mode switching according to still another exemplary embodiment;
Fig. 3C is a block diagram of another interface related to a method for mode switching according to still another exemplary embodiment;
Fig. 4 is a flow chart of a method for mode switching according to still another exemplary embodiment;
Fig. 5 is a block diagram of a device for mode switching according to an exemplary embodiment;
Fig. 6 is a block diagram of a device for mode switching according to another exemplary embodiment;
Fig. 7 is a block diagram of a device for mode switching according to another exemplary embodiment;
Fig. 8 is a block diagram of a device for mode switching according to still another exemplary embodiment;
Fig. 9 is a block diagram of a device for mode switching according to an exemplary embodiment; and
Fig. 10 is a block diagram of a device for mode switching according to another exemplary embodiment.

Specific embodiments of the present disclosure have been shown through the accompanying drawings above, and will be described in detail hereinafter. The accompanying drawings and text descriptions are not intended to limit the scope of the conception of the present disclosure through any manner, but to explain the concept of the present disclosure for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

In each embodiment of the present disclosure, the household electrical appliance mentioned may include any one of a fan, an air conditioner, a humidifier and an air purifier. In each embodiment of the present disclosure, the electronic device mentioned may be a mobile phone, a tablet, an e-book reader, a MP3 (Moving Picture Experts Group Audio Layer III) player, a MP4 (Moving Picture Experts Group Audio Layer IV) player, a smart TV, a laptop computer, a desktop computer and the like.

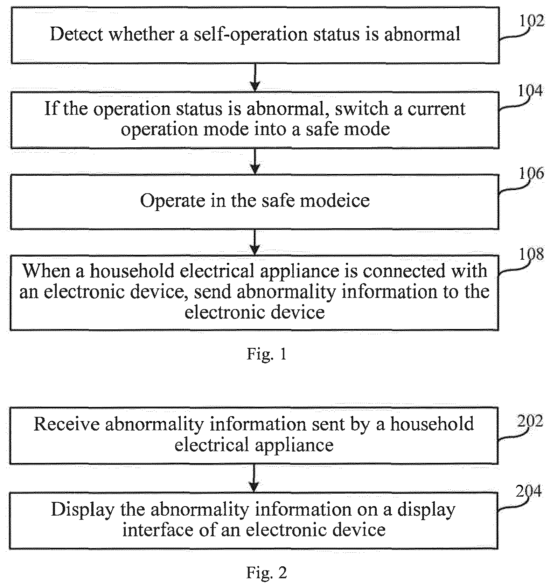

Fig. 1 is a flow chart of a method for mode switching according to an exemplary embodiment. The embodiment is illustrated taking an example where the method for mode switching is applied in a household electrical appliance. The method for mode switching may include the following steps.

In step 102, whether a self-operation status is abnormal is detected.

In step 104, if the operation status is abnormal, a current operation mode is switched into a safe mode.

In step 106, operation is performed in the safe mode. The safe mode includes at least one of powering off a motor in the household electrical appliance, giving an alarm and stopping rotation of a fan in the household electrical appliance.

In step 108, when the household electrical appliance is connected with an electronic device, abnormality information is sent to the electronic device. The electronic device is configured to display the abnormality information on a display interface of the electronic device, and the abnormality information includes at least one of an abnormality position, an abnormality problem, abnormality time and an abnormality picture.

Accordingly, in the method for mode switching provided by the present embodiment, whether a self-operation status is abnormal is detected, a current operation mode is switched into a safe mode if the operation status is abnormal, and the household electrical appliance operates in the safe mode, and sends the abnormality information to an electronic device when the household electrical appliance is connected with the electronic device. Thus, the present disclosure solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

Fig. 2 is a flow chart of a method for mode switching according to another exemplary embodiment. The embodiment is illustrated taking an example where the method for mode switching is applied in an electronic device. The method for mode switching may include the following steps.

In step 202, abnormality information sent by a household electrical appliance is received. The abnormality information is sent by the household electrical appliance after the household electrical appliance detects that a self-operation status of the household electrical appliance is abnormal.

In step 204, the abnormality information is displayed on a display interface of the electronic device. The abnormality information includes at least one of an abnormality position, an abnormality problem, abnormality time and an abnormality picture.

Accordingly, in the method for mode switching provided by the present embodiment, abnormality information sent by the household electrical appliance is received, and the abnormality information is displayed on the display interface of the electronic device. Thus, the method solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

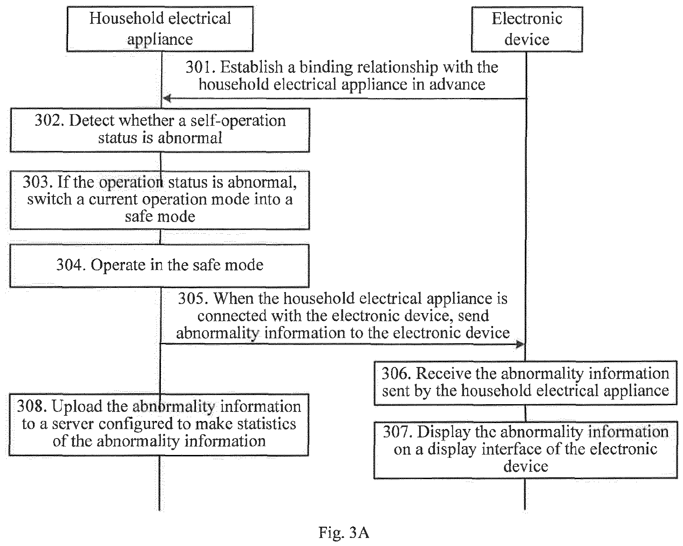

Fig. 3A is a flow chart of a method for mode switching according to another exemplary embodiment not being part of the present invention. The embodiment is illustrated taking an example where the method for mode switching is applied in a household electrical appliance and an electronic device. The method for mode switching may include the following steps.

In step 301, the electronic device establishes a binding relationship with the household electrical appliance in advance.

The electronic device may establish the binding relationship between the electronic device and the household electrical appliance according to the identity of the household electrical appliance and the identity of the electronic device. The household electrical appliance only receives a control signal sent by an electronic device that establishes the binding relationship with the household electrical appliance.

For instance, when the household electrical appliance is an air purifier and the electronic device is a smartphone, if a two-dimensional code identity exists on the surface of the air purifier, the smartphone may acquire the identity of the air purifier through scanning the two-dimensional code identity, and establish a binding relationship between the air purifier and the smartphone according to the acquired identity of the air purifier and the identity of the smartphone itself. The air purifier only receives a control signal sent by the electronic device that establishes the binding relationship with the air purifier.

In step 302, the household electrical appliance detects whether a self-operation status is abnormal.

During the operation process, the household electrical appliance detects whether the self-operation status is abnormal.

For instance, when the household electrical appliance is an air purifier, the air purifier detects whether a self-operation status is abnormal during operation process.

As a first possible implementation manner, the step may include, but is not limited to, the following sub-steps.

First: the household electrical appliance detects whether a door is opened.

The door in the household electrical appliance may include at least one of a top door with blades, a lower door and a back filter door, all of which can be opened. In the household electrical appliance, any one of an R-type switch, a microswitch or a magnetomotive switch may be additionally equipped in advance at these doors. When any door is opened, the above switches may be triggered. The household electrical appliance detects whether a door is opened through the trigger condition of any switch mentioned-above.

For instance, when the household electrical appliance is an air purifier, the air purifier detects whether a door is opened.

Second: if the door is opened, the household electrical appliance is determined to be abnormal.

If any door in the household electrical appliance is opened, the household electrical appliance is determined to be abnormal.

For instance, when the household electrical appliance is an air purifier, the air purifier is determined to be abnormal if any door in the air purifier is opened.

As a second possible implementation manner, the step may include, but is not limited to, the following sub-steps.

First: the household electrical appliance detects whether a foreign object exists.

A foreign object may exist in grilles of the household electrical appliance sometimes. The household electrical appliance detects whether the foreign object exists.

For instance, when the household electrical appliance is an air purifier, the air purifier detects whether the foreign object exists.

Second: if the foreign object exists, the household electrical appliance is determined to be abnormal.

If the foreign object exists in grilles, the household electrical appliance is determined to be abnormal.

For instance, when the household electrical appliance is an air purifier, the air purifier is determined to be abnormal if the foreign object exists in grilles of the air purifier.

As a third possible implementation manner, the step may include, but is not limited to, the following sub-steps.

First: the household electrical appliance detects whether a normal operation is obstructed by an external force.

There are two types of possible external forces obstructing a normal operation in the household electrical appliance.

### 1. Gravity Pressure

For example, when heavy things are placed at an air outlet, purifying efficiency will be severely affected, and thereby a normal operation of the household electrical appliance is obstructed.

### 2. Excessive Atmospheric Pressure

For example, when the air outlet is very close to a wall surface, excessive atmospheric pressure is caused due to the reflection of the wall surface, which obstructs the normal operation of the household electrical appliance.

For instance, when the household electrical appliance is an air purifier, the air purifier detects whether the normal operation is obstructed by the external force.

Second: if the external force is larger than a first threshold, the household electrical appliance is determined to be abnormal.

The first threshold may either be set by a user according to usage condition, or be set in advance by a device maintaining personnel.

For instance, when the household electrical appliance is an air purifier, the air purifier is determined to be abnormal if the external force is larger than the first threshold.

One of the foregoing three possible implementation manners may be performed, or a combination of any two of the foregoing three possible implementation manners may be performed, or a combination of the three may be performed. The household electrical appliance is determined to be abnormal as long as any one of the cases appears.

In step 303, if the household electrical appliance is abnormal, the household electrical appliance switches a current operation mode into a safe mode.

If the household electrical appliance is abnormal, the household electrical appliance switches the current operation mode into the safe mode.

For instance, when the household electrical appliance is an air purifier, the current operation mode is switched to the safe mode if the air purifier is abnormal.

In step 304, the household electrical appliance operates in the safe mode. The safe mode includes at least one of powering off a motor in the household electrical appliance, giving an alarm and stopping rotation of a fan in the household electrical appliance.

When the household electrical appliance is abnormal since a door is opened or the normal operation is obstructed by an external force, the household electrical appliance may power off the current motor and give an alarm at the same time. After the current motor is powered off, a fan still runs, but its rotational speed is slowed.

When the household electrical appliance is abnormal since a foreign object exists in grilles, the household electrical appliance may power off the current motor and give an alarm at the same time. The household electrical appliance may also trigger to lock a rotating shaft to stop the operation of the fan immediately.

When more than one fan exist in the household electrical appliance, and when the household electrical appliance is abnormal since a foreign object exists in a top grille, a top fan at this position may stop rotating immediately or all the fans in the entire household electrical appliance may stop rotating. When the household electrical appliance is abnormal since a foreign object exists in a bottom grille, a lower fan at this position may stop rotating immediately or all the fans in the entire household electrical appliance may stop rotating.

For instance, when the household electrical appliance is an air purifier, the air purifier runs in the safe mode.

In step 305, when the household electrical appliance is connected with the electronic device, the household electrical appliance sends abnormality information to the electronic device. The electronic device is configured to display the abnormality information on a display interface of the electronic device, and the abnormality information includes at least one of an abnormality position, an abnormality problem, abnormality time and an abnormality picture.

When a camera exists at the region where the household electrical appliance locates or at the abnormality position of the household electrical appliance, the electronic device may receive the abnormality information corresponding to the abnormality position captured by the camera.

For instance, when the household electrical appliance is an air purifier and a camera exists at the region where the air purifier locates or at the abnormality position of the air purifier, the air purifier sends the abnormality information to the electronic device.

Step 305 may be implemented through the following three manners.

As a first possible implementation manner, the household electrical appliance sends the abnormality information to the electronic device through a wireless connection established with the electronic device. The wireless connection may be a blue tooth connection or a WIFI (Wireless-Fidelity) connection.

For instance, when the household electrical appliance is an air purifier, the air purifier sends the abnormality information to the electronic device through a wireless connection established with the electronic device.

As a second possible implementation manner, the household electrical appliance sends, through a gateway device, the abnormality information to the electronic device belonging to the same LAN with the household electrical appliance. That is, the household electrical appliance and the electronic device belong to the same LAN, and the household electrical appliance and the electronic device may communicate with each other through a gateway device.

For instance, when the household electrical appliance is an air purifier, the air purifier sends, a gateway device, the abnormality information to the electronic device belonging to the same LAN with the household electrical appliance.

As a third possible implementation manner, the household electrical appliance sends the abnormality information to the electronic device through internet.

For instance, when the household electrical appliance is an air purifier, the air purifier sends the abnormality information to the electronic device through the internet.

In step 306, the electronic device receives the abnormality information sent by the household electrical appliance.

When the household electrical appliance is connected with the electronic device, the electronic device receives the abnormality information sent by the household electrical appliance.

For instance, when the household electrical appliance is an air purifier, the electronic device receives the abnormality information sent by the air purifier when the air purifier is connected with the electronic device.

Step 306 may be implemented through the following three manners.

As a first possible implementation manner, the electronic device receives the abnormality information sent by the household electrical appliance through a wireless connection established with the household electrical appliance. The wireless connection may be a blue tooth connection or a WIFI connection.

As a second possible implementation manner, the electronic device receives, through a gateway device, the abnormality information sent by the household electrical appliance belonging to the same LAN with the electronic device That is, the household electrical appliance and the electronic device belong to the same LAN, and the household electrical appliance and the electronic device may communicate with each other through a gateway device.

As a third possible implementation manner, the electronic device receives the abnormality information sent by the household electrical appliance through internet.

In step 307, the electronic device displays the abnormality information on a display interface of the electronic device. The abnormality information includes at least one of an abnormality position, an abnormality problem, abnormality time and an abnormality picture.

For instance, when the electronic device is a smartphone, the abnormality information is displayed on the display interface of the smartphone. The abnormality information includes at least one of an abnormality position, an abnormality problem, abnormality time and an abnormality picture.

When the abnormality information includes at least one of an abnormality position, an abnormality problem and abnormality time, the abnormality information is displayed on the display interface of the electronic device in a literal form.

When the abnormality information includes an abnormality picture, the abnormality information is displayed on the display interface of the electronic device in a picture form.

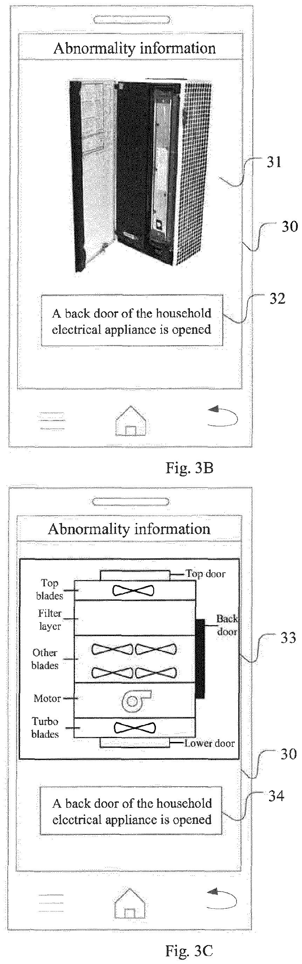

For instance, referring to Fig. 3B, it shows a block diagram of an interface displaying abnormality information on a display interface 30 of an electronic device in a form of picture 31. The abnormality problem 32 is that a back door of a household electrical appliance is opened.

When the abnormality position in the abnormality information is displayed in a block diagram of a household electrical appliance, the abnormality position and other positions in the block diagram of the household electrical appliance are distinctively displayed. The distinctive display includes at least one of distinctive display via colors, distinctive display via animations and distinctive display via profiles.

For instance, referring to Fig. 3C, it shows a block diagram of an interface displaying the abnormality information on a display interface 30 of an electronic device in a form of a block diagram 33 of a household electrical appliance. The abnormality problem 34 is that a back door of the household electrical appliance is opened. In the block diagram 33 of the household electrical appliance, the abnormality position (i.e., the back door) and other positions in the block diagram of the household electrical appliance are distinctively displayed via colors. As shown in Fig. 3C, the abnormality position at the back door is displayed in black, and other positions are displayed in white.

For instance, when the household electrical appliance is an air purifier, and the abnormality position in the abnormality information is displayed in a block diagram of the air purifier, the abnormality position and other positions in the block diagram of the air purifier are distinctively displayed.

In step 308, the household electrical appliance uploads the abnormality information to a server. The server is configured to make statistics of the abnormality information.

Step 308 may be performed at any time point after the step 305.

For instance, when the household electrical appliance is an air purifier, the air purifier uploads the abnormality information to a server which is configured to make statistics of the abnormality information.

Accordingly, in the method for mode switching provided by the present embodiment, whether a self-operation status is abnormal is detected, a current operation mode is switched into a safe mode if the operation status is abnormal, and the household electrical appliance operates in the safe mode, and sends the abnormality information to an electronic device when the household electrical appliance is connected with the electronic device. Thus, the present disclosure solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

Moreover, in the method for mode switching provide by the present embodiment, abnormality information is uploaded to a server which is configured to make statistics of the abnormality information. Consequently, a manufacturer may know and make statistics of the abnormality information of household electrical appliances through the server.

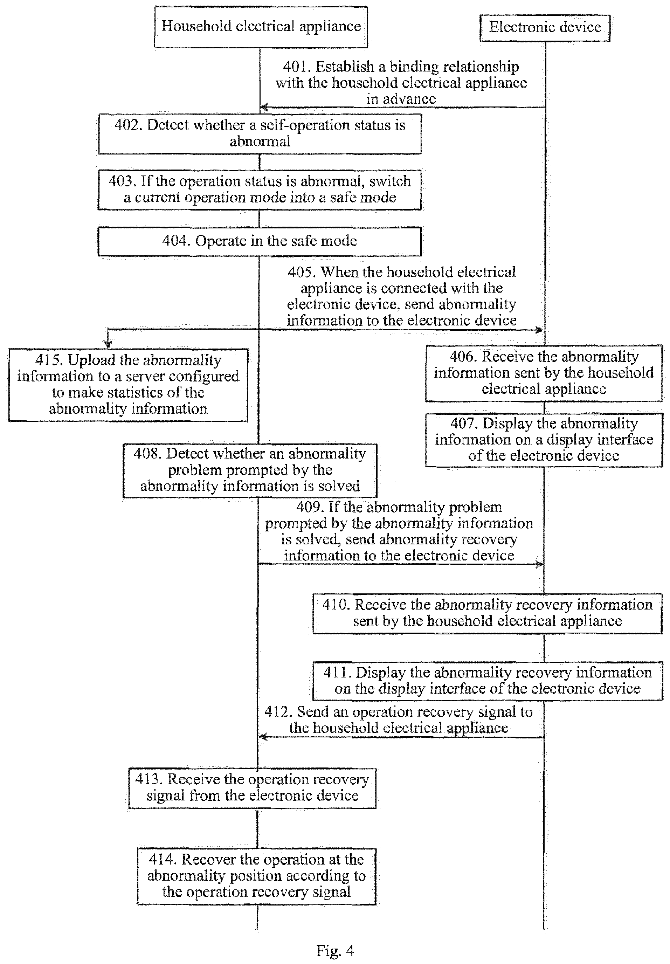

Fig. 4 is a flow chart of a method for mode switching according to still another exemplary embodiment. The embodiment is illustrated taking an example where the method for mode switching is applied in a household electrical appliance and an electronic device. The method for mode switching may include the following steps.

In step 401, the electronic device establishes a binding relationship with the household electrical appliance in advance.

The electronic device may establish the binding relationship between the electronic device and the household electrical appliance according to the identity of the household electrical appliance and the identity of the electronic device. The household electrical appliance only receives a control signal sent by an electronic device that establishes the binding relationship with the household electrical appliance.

For instance, when the electronic device is a smart TV , the smart TV may establish the binding relationship between the household electrical appliance and the smart TV according to the identity of the household electrical appliance and the identity of the smart TV. The household electrical appliance only receives a control signal sent by the smart TV that establishes the binding relationship with the household electrical appliance.

In step 402, the household electrical appliance detects whether a self-operation status is abnormal.

During the operation process, the household electrical appliance detects whether the self-operation status is abnormal.

The possible implementation manners included in step 402 may be the same with the implementation manners involved in step 302 in the foregoing embodiment, which thus will not be elaborated herein.

In step 403, if the operation status is abnormal, the household electrical appliance switches a current operation mode into a safe mode.

In step 404, the household electrical appliance operates in the safe mode. The safe mode includes at least one of powering off a motor in the household electrical appliance, giving an alarm and stopping rotation of a fan in the household electrical appliance.

When the household electrical appliance is abnormal since a door is opened or a normal operation is obstructed by an external force, the household electrical appliance may power off the current motor and give an alarm at the same time. After the current motor is powered off, a fan still runs, but its rotational speed is slowed.

When the household electrical appliance is abnormal since a foreign object exists in grilles, the household electrical appliance may power off the current motor and give an alarm at the same time. The household electrical appliance may also trigger to lock a rotating shaft to stop the operation of the fan immediately.

When more than one fan exist in the household electrical appliance, and when the household electrical appliance is abnormal since a foreign object exists in a top grille, a top fan at this position may stop rotating immediately or all the fans in the entire household electrical appliance may stop rotating. When the household electrical appliance is abnormal since a foreign object exists in a bottom grille, a lower fan at this position may stop rotating immediately or all the fans in the entire household electrical appliance may stop rotating.

In step 405, when the household electrical appliance is connected with the electronic device, the household electrical appliance sends abnormality information to the electronic device. The electronic device is configured to display the abnormality information on a display interface of the electronic device, and the abnormality information includes at least one of an abnormality position, an abnormality problem, abnormality time and an abnormality picture.

When a camera exists at the region where the household electrical appliance locates or at the abnormality position of the household electrical appliance, the household electrical appliance may capture the abnormality position through the camera and send the abnormality information corresponding to the abnormality position to the electronic device.

The step 405 may be implemented through the following three manners.

As a first possible implementation manner, the household electrical appliance sends the abnormality information to the electronic device through a wireless connection established with the electronic device. The wireless connection may be a blue tooth connection or a WIFI connection.

As a second possible implementation manner, the household electrical appliance sends, through a gateway device, the abnormality information to the electronic device belonging to the same LAN with the household electrical appliance. That is, the household electrical appliance and the electronic device belong to the same LAN, and the household electrical appliance and the electronic device may be communicate with each other through the gateway device.

As a third possible implementation manner, the household electrical appliance sends the abnormality information to the electronic device through internet.

In step 406, the electronic device receives the abnormality information sent by the household electrical appliance.

When the household electrical appliance and the electronic device are connected, the electronic device receives the abnormality information sent by the household electrical appliance.

Step 406 may be implemented through the following three manners.

As a first possible implementation manner, the electronic device receives the abnormality information sent by the household electrical appliance through a wireless connection established with the household electrical appliance. The wireless connection may be a blue tooth connection or a WIFI connection.

As a second possible implementation manner, the electronic device receives, through a gateway device, the abnormality information sent by the household electrical appliance belonging to the same LAN with the electronic device. That is, the household electrical appliance and the electronic device belong to the same LAN, and the household electrical appliance and the electronic device may communicate with each other through the gateway device.

As a third possible implementation manner, the electronic device receives the abnormality information sent by the household electrical appliance through internet.

In step 407, the electronic device displays the abnormality information on a display interface of the electronic device. The abnormality information includes at least one of an abnormality position, an abnormality problem, abnormality time and an abnormality picture.

For instance, when the electronic device is a smart TV, the abnormality information is displayed on a display interface of the smart TV. The abnormality information includes at least one of an abnormality position, an abnormality problem, abnormality time and an abnormality picture.

When the abnormality information includes at least one of an abnormality position, an abnormality problem and abnormality time, the abnormality information is displayed on a display interface of the electronic device in a literal form.

When the abnormality information includes an abnormality picture, the abnormality information is displayed on the display interface of the electronic device in a picture form.

When the abnormality position in the abnormality information is displayed in the block diagram of the household electrical appliance, the abnormality position and other positions in the block diagram of the household electrical appliance are distinctively displayed. The distinctive display includes at least one of distinctive display via colors, distinctive display via animations and distinctive display via profiles.

In step 408, the household electrical appliance detects whether the abnormality problem prompted by the abnormality information is solved.

When a camera exists at the region where the household electrical appliance locates or at the abnormality position of the household electrical appliance, the household electrical appliance may capture the abnormality position through the camera; if the operation at the abnormality position is recovered back to normal, then the abnormality problem is solved.

In step 409, if the abnormality problem prompted by the abnormality information is solved, the household electrical appliance sends abnormality recovery information to the electronic device. The electronic device is configured to display the abnormality recovery information on the display interface of the electronic device.

In step 410, the electronic device receives the abnormality recovery information sent by the household electrical appliance.

In step 411, the electronic device displays the abnormality recovery information on the display interface of the electronic device.

For instance, when the electronic device is a smart TV, the abnormality recovery information is displayed on a display interface of the smart TV.

When the abnormality recovery information includes at least one of an abnormality recovery position, an abnormality recovery problem and abnormality recovery time, the abnormality recovery information is displayed on a display interface of the electronic device in a literal form. The user may compare the abnormality recovery information with the abnormality information.

When the abnormality recovery information includes an abnormality recovery picture, the abnormality recovery information is displayed on the display interface of the electronic device in a picture form. The user may compare the abnormality recovery information with the abnormality information.

When the abnormality recovery position in the abnormality recovery information is displayed in a block diagram of the household electrical appliance, both the abnormality recovery position and other positions in the block diagram of the household electrical appliance are displayed normally. The user may compare the abnormality recovery information with the abnormality information.

In step 412, the electronic device sends an operation recovery signal to the household electrical appliance. The operation recovery signal is configured to instruct the household electrical appliance to recover the operation at the abnormality position.

The electronic device sends the operation recovery signal to the electronic device. The operation recovery signal may be triggered when a user clicks the abnormality recovery position in a block diagram of the household electrical appliance.

For instance, the abnormality recovery problem is that a top door with blades of the household electrical appliance is closed. When the top door with blades is closed, the electronic device is triggered to send an operation recovery signal to the household electrical appliance when a user clicks the position of the top door with blades in the block diagram of the household electrical appliance. The operation recovery signal is configured to restore the power supply of a motor at the position of the top door with blades.

For instance, the abnormality recovery problem is that a foreign object at the position of a top grille of the household electrical appliance is removed; when the foreign object is removed, the electronic device is triggered to send an operation recovery signal to the household electrical appliance when a user clicks the position of the top grille in the block diagram of the household electrical appliance. The operation recovery signal is configured to recover the operation of a fan at the position of the top grille.

For instance, the abnormality recovery problem is that a heavy thing at the position of the top grille of the household electrical appliance instructing the normal operation of the household electrical appliance is taken away; when the heavy thing is taken away and thereby does not instruct the normal operation of the household electrical appliance, the electronic device is triggered to send an operation recovery signal to the household electrical appliance when a user clicks the position of the top grille in the block diagram of the household electrical appliance. The operation recovery signal is configured to restore the power supply of a motor at the position of the top grille.

In step 413, the household electrical appliance receives the operation recovery signal from the electronic device.

For instance, the abnormality problem is that a top door with blades of the household electrical appliance is opened; the household electrical appliance receives the operation recovery signal sent by the electronic device after the top door with blades is closed.

For instance, the abnormality problem is that a foreign object exists in the position of a top grille of the household electrical appliance; the household electrical appliance receives the operation recovery signal sent by the electronic device after foreign object is removed.

For instance, the abnormality problem is that a heavy thing instructing the normal operation of the household electrical appliance exists at the position of a top grille of the household electrical appliance; when the heavy thing is taken away and thereby does not instruct the normal operation of the household electrical appliance, the household electrical appliance receives the operation recovery signal sent by the electronic device.

In step 414, the household electrical appliance recovers the operation at the abnormality position according to the operation recovery signal.

For instance, the abnormality position is the position of a top door with blades of the household electrical appliance, and the abnormality problem is that the top door with blades is opened; when the abnormality problem is solved, i.e., the top door with blades is closed, the household electrical appliance recovers the operation at the abnormality position according to the operation recovery signal, i.e., the household electrical appliance restores the power supply at the position of the top door with blades according to the operation recovery signal.

For instance, the abnormality position is the position of a top grille of the household electrical appliance, and the abnormality problem is that a foreign object exists at the position of the top grille; when the abnormality problem is solved, i.e., the foreign object is removed, the household electrical appliance restores the operation of the abnormality position according to the operation recovery signal, i.e., the household electrical appliance restores the operation of a fan at the position of the top grille according to the operation recovery signal.

For instance, the abnormality position is the position of a top grille of the household electrical appliance, and the abnormality problem is that a heavy thing exists at the position of the top grille and the heavy thing thereby instructs the normal operation of the household electrical appliance; when the abnormality problem is solved, i.e., the heavy thing is taken away and does not instruct the normal operation of the household electrical appliance, the household electrical appliance restores the operation at the abnormality position according to the operation recovery signal, i.e., the household electrical appliance restores the power supply of a motor at the position of the top grille according to the operation recovery signal.

In step 415, the household electrical appliance uploads the abnormality information to a server which is configured to make statistics of the abnormality information.

Step 415 may be performed at any time point after step 405.

Accordingly, in the method for mode switching provided by the present embodiment, whether a self-operation status is abnormal is detected, a current operation mode is switched into a safe mode if the operation status is abnormal, and the household electrical appliance operates in the safe mode, and sends the abnormality information to an electronic device when the household electrical appliance is connected with the electronic device. Thus, the present disclosure solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

Moreover, in the method for mode switching provided by the present embodiment, whether the abnormality problem prompted by the abnormality information is solved is detected, and abnormality recovery information is sent to the electronic device if the abnormality problem prompted by the abnormality information is solved. Consequently, whether the abnormality problem is solved can be monitored in real time.

Moreover, in the method for mode switching, operation recovery signal from the electronic device is received, and the operation at the abnormality position is recovered according to the operation recovery signal. Consequently, the operation may be automatically recovered without manual recovery.

Moreover, in the method for mode switching provided by the present embodiment, abnormality information is uploaded to a server configured to make statistics of the abnormality information. Consequently, a manufacturer may know and make statistics of the abnormality information of household electrical appliances through the server.

Embodiments of devices of the present disclosure are described hereinafter, which may be used for performing embodiments of methods of the present disclosure. For the details not described in the embodiments of devices of the present disclosure, please refer to the embodiments of methods of the present disclosure.

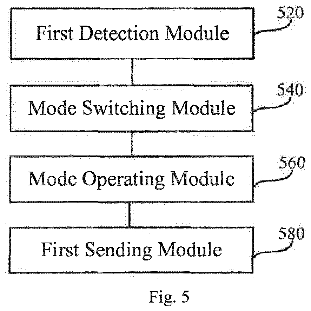

Fig. 5 is a block diagram of a device for mode switching according to an exemplary embodiment. The device for mode switching may become part or all of a household electrical appliance through software, hardware or a combination thereof. The device for mode switching may include:
a first detection module 520 configured to detect whether a self-operation status is abnormal;
a mode switching module 540 configured to, when the operation status is abnormal, switch a current operation mode into a safe mode;
a mode operating module 560 configured to operate in the safe mode, the safe mode including at least one of powering off a motor in the household electrical appliance, giving an alarm and stopping rotation of a fan in the household electrical appliance; and
a first sending module 580 configured to, when the household electrical appliance is connected with an electronic device, send abnormality information to the electronic device, the electronic device being configured to display the abnormality information on a display interface of the electronic device, and the abnormality information including at least one of an abnormality position, an abnormality problem, abnormality time and an abnormality picture.

Accordingly, in the device for mode switching provided by the present embodiment, whether a self-operation status is abnormal is detected, a current operation mode is switched into a safe mode if the operation status is abnormal, and the household electrical appliance operates in the safe mode, and sends the abnormality information to an electronic device when the household electrical appliance is connected with the electronic device. Thus, the present disclosure solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

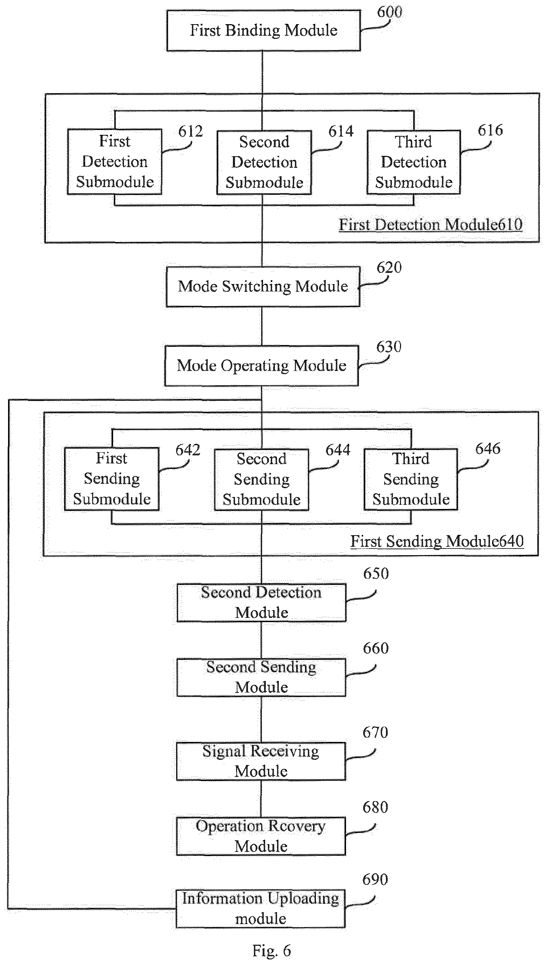

Fig. 6 is a block diagram of a device for mode switching according to another exemplary embodiment. The device for mode switching may become part or all of a household electrical appliance through software, hardware or a combination thereof. The device for mode switching may include:
a first detection module 610 configured to detect whether a self-operation status is abnormal;
a mode switching module 620 configured to, when the operation status is abnormal, switch the current operation mode into a safe mode;
a mode operating module 630 configured to operate in the safe mode, the safe mode including at least one of powering off a motor in the household electrical appliance, giving an alarm and stopping rotation of a fan in the household electrical appliance; and
a first sending module 640 configured to, when the household electrical appliance is connected with an electronic device, send abnormality information to the electronic device, the electronic device being configured to display the abnormality information on a display interface of the electronic device, and the abnormality information including at least one of an abnormality position, an abnormality problem, abnormality time and an abnormality picture.

Optionally, the first detection module 610 includes:
a first detection submodule 612 configured to detect whether a door is opened; and when the door is opened, determine that the household electrical appliance is abnormal;
and/or,
a second detection submodule 614 configured to detect whether a foreign object exists; and when the foreign object exists, determine that the household electrical appliance is abnormal;
and/or,
a third detection submodule 616 configured to detect whether normal operation is obstructed by an external force; and when the door is opened, determine that the household electrical appliance is abnormal;
Optionally, the device further includes:
   a second detection module 650 configured to detect whether the abnormality problem prompted by the abnormality information is solved; and
   a second sending module 660 configured to, when the abnormality problem prompted by the abnormality information is solved, send abnormality recovery information to the electronic device, the electronic device being configured to display the abnormality recovery information on the display interface of the electronic device.

Optionally, the device further includes:
a signal receiving module 670 configured to receive an operation recovery signal from the electronic device; and
an operation recovery module 680 configured to recover the operation at the abnormality position according to the operation recovery signal.

Optionally, the device further includes:
an information uploading module 690 configured to upload the abnormality information to a server, the server being configured to count the abnormality information.

Optionally, the first sending module 640 includes:
a first sending submodule 642 configured to send the abnormality information to the electronic device through a wireless connection established with the electronic device;
or,
a second sending submodule 644 configured to send, through a gateway device, the abnormality information to the electronic device belonging to the same LAN with the household electrical appliance;
or,
a third sending submodule 640 configured to send the abnormality information to the electronic device through internet.

The device further includes:
a first binding module 600 configured to establish a binding relationship with the electronic device in advance.

Accordingly, in the device for mode switching provided by the present embodiment, whether a self-operation status is abnormal is detected, a current operation mode is switched into a safe mode if the operation status is abnormal, and the household electrical appliance operates in the safe mode, and sends the abnormality information to an electronic device when the household electrical appliance is connected with the electronic device. Thus, the present disclosure solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced

Moreover, in the device for mode switching provided by the present embodiment, whether the abnormality problem prompted by the abnormality information is solved, and the abnormality recovery information is sent to the electronic device if the abnormality problem prompted by the abnormality information is solved. Consequently, whether the abnormality problem is solved can be monitored in real time.

Moreover, in the device for mode switching provided by the present embodiment, operation recovery signal is received from the electronic device, and the operation at the abnormality position is recovered according to the operation recovery signal. Consequently, the operation can be automatically recovered without manual recovery.

Moreover, in the device for mode switching provided by the present embodiment, the abnormality information is uploaded to a server configured to make statistics of the abnormality information. Consequently, a manufacturer may know and make statistics of the abnormality information of household electrical appliances through the server.

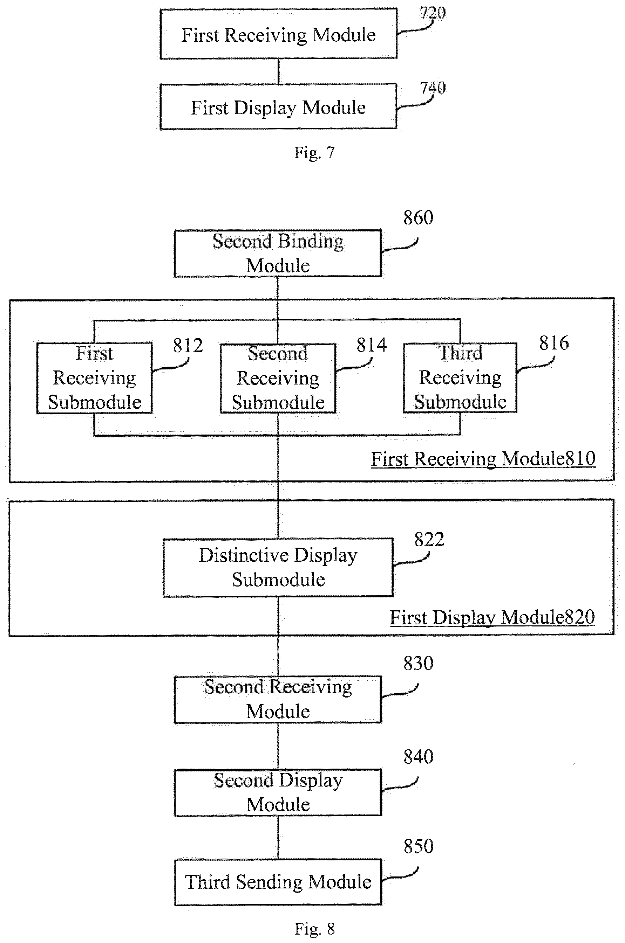

Fig. 7 is a block diagram of a device for mode switching according to an exemplary embodiment. The device for mode switching may become part or all of an electronic device through software, hardware or a combination thereof. The device for mode switching may include:
a first receiving module 720 configured to receive abnormality information sent by a household electrical appliance, the abnormality information being sent by the household electrical appliance after the household electrical appliance detects that a self-operation status of the household electrical appliance is abnormal; and
a first display module 740 configured to display the abnormality information on a display interface of the electronic device, the abnormality information including at least one of an abnormality position, an abnormality problem, abnormality time and an abnormality picture.

Accordingly, in the device for mode switching provide by the present embodiment, abnormality information sent by the household electrical appliance is received, and the abnormality information is displayed on the display interface of the electronic device. Thus, the device solved the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

Fig. 8 is a block diagram of a device for mode switching according to an exemplary embodiment. The device for mode switching may become part or all of an electronic device through software, hardware or a combination thereof. The device for mode switching may include:
a first receiving module 810 configured to receive abnormality information sent by a household electrical appliance, the abnormality information being sent by the household electrical appliance after the household electrical appliance detects that a self-operation status of household electrical appliance is abnormal; and
a first display module 820 configured to display the abnormality information on a display interface of the electronic device, the abnormality information including at least one of an abnormality position, an abnormality problem, abnormality time and an abnormality picture.

Optionally, the first display module 820 includes:
a distinctive display submodule 822 configured to, when the abnormality position in the abnormality information is displayed in a block diagram of the household electrical appliance, distinctively display the abnormality position and other positions in the block diagram of the household electrical appliance, the distinctive display including at least one of distinctive display via colors, distinctive display via animations and distinctive display via profiles.

Optionally, the device further includes:
a second receiving module 830 configured to receive abnormality recovery information sent by the household electrical appliance, the abnormality recovery information being sent by the household electrical appliance after the household electrical appliance detects that the abnormality problem is solved; and
a second display module 840 configured to display the abnormality recovery information on the display interface of the electronic device.

Optionally, the device further includes:
a third sending module 850 configured to send an operation recovery signal to the household electrical appliance, the operation recovery signal being configured to instruct the household electrical appliance to recover the operation at the abnormality position.

Optionally, the first receiving module 810 includes:
a first receiving submodule 812 configured to receive the abnormality information sent by the household electrical appliance through a wireless connection established with the household electrical appliance;
or,
a second receiving submodule 814 configured to receive, through a gateway device, the abnormality information sent by the household electrical appliance belonging to the same LAN with the household electrical appliance;
or,
a third receiving submodule 816 configured to receive the abnormality information sent by the household electrical appliance through internet.

The device further includes:
a second binding module 860 configured to establish a binding relationship with the household electrical appliance in advance.

Accordingly, in the device for mode switching provided by the present embodiment, abnormality information sent by the household electrical appliance is received, and the abnormality information is displayed on the display interface of the electronic device. Thus, the device solves the problems that a user cannot find the abnormality of the household electrical appliance in time and relatively high potential safety hazards exist if the user forgets to adjust the operation mode of the household electrical appliance into an off mode. Consequently, the user can find the abnormality of the household electrical appliance in time so as to effectively reduce the extent of damage of the household electrical appliance, and the potential safety hazards while the user is using the household electrical appliance is effectively reduced.

Moreover, in the device for mode switching provided by the present embodiment, the abnormality recovery information sent by the household electrical appliance is received, and the abnormality recovery information is displayed on the display interface of the electronic device. Consequently, whether the abnormality problem is solved can be monitored in real time.

Moreover, in the device for mode switching provided by the present embodiment, the operation recovery signal is sent to the household electrical appliance. Consequently, the operation may be automatically recovered without manual recovery.

With respect to the devices in the above embodiments, the specific manners for performing operations for individual modules have been described in detail in the embodiments regarding the methods, which thus will not be elaborated herein.

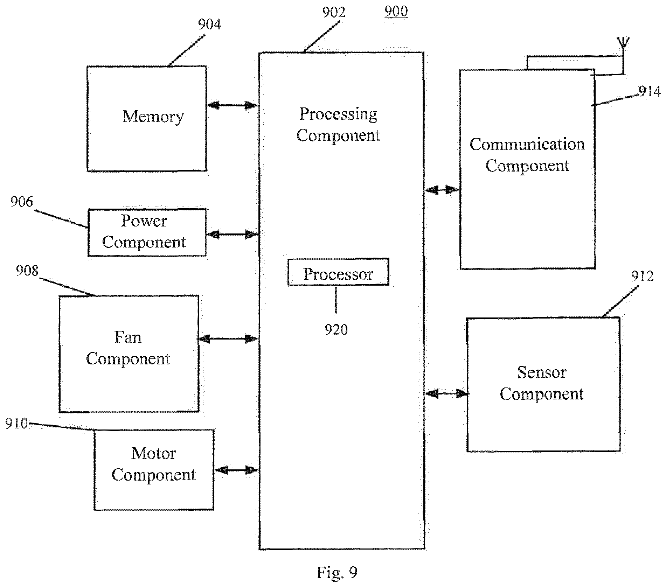

Fig. 9 is a block diagram showing a device 900 for mode switching according to an exemplary embodiment. The device may be a household electrical appliance.

Referring to Fig. 9, the device 900 may include one or more of the following components: a processing component 902, a memory 904, a power component 906, a fan component 908, a motor component 910, a sensor component 912, and a communication component 914.

The processing component 902 typically controls overall operations of the device 900, such as the operations associated with display, and data communications. The processing component 902 may include one or more processors 920 to execute instructions to perform all or part of the steps in the above described methods. Moreover, the processing component 902 may include one or more modules which facilitate the interaction between the processing component 902 and other components.

The memory 904 is configured to store various types of data to support the operation of the device 900. Examples of such data include instructions for any applications or methods operated on the device 900. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The fan component 908 is a component for producing noises and improving the air quality in the device 900.

The motor component 910 is an electromagnetic device in the device 900 that converts or transfers electric energy according to the law of electromagnetic induction. The motor is represented by letter M (represented by D in the old standard) in an electric circuit, which typically produces a driving torque, functioning as the power source of electric appliances or various machines.

The sensor component 912 includes one or more sensors to provide status assessments of various aspects of the device 900.

The communication component 914 is configured to facilitate communication, wired or wirelessly, between the devicc 900 and other devices. The device 900 can access a wireless network based on a communication standard, such as WiFi, 2G, or 3G, or a combination thereof. In one exemplary embodiment, the communication component 914 receives a broadcast signal or broadcast associated information from an external broadcast management system via a broadcast channel. In one exemplary embodiment, the communication component 914 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for mode switching as shown in Fig. 1 or Fig. 3A.

In exemplary embodiments, there is also provided a non-transitory computer readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

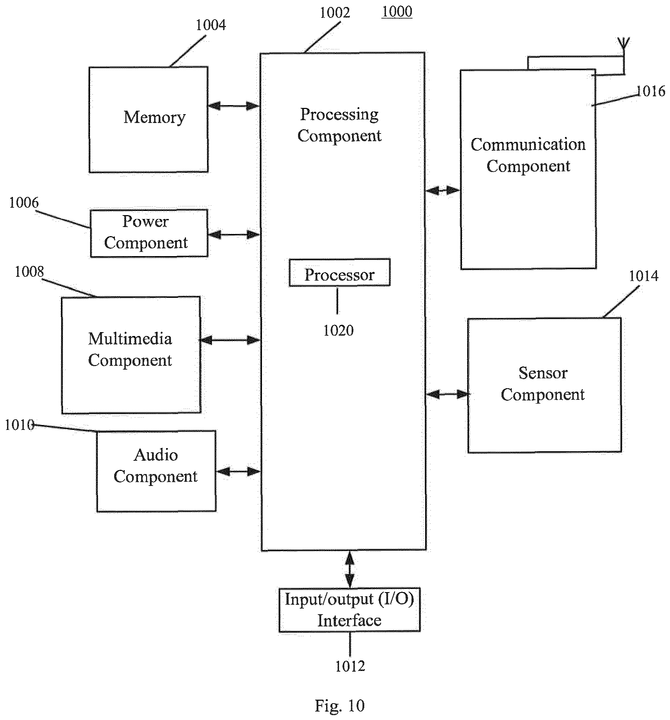

Fig. 10 is a block diagram showing a device 1000 for mode switching according to another exemplary embodiment. The device may be an electronic device, for example, the device 1000 may be a mobile phone, a computer, a digital broadcast terminal, a messaging device, a gaming console, a tablet, a medical device, exercise equipment, a personal digital assistant, and the like.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method for mode switching as shown in Fig. 2 or Fig. 4.

In exemplary embodiments, there is also provided a non-transitory computer readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for mode switching in a household electrical appliance connected with an electronic device, **characterized in that** the method comprising the following steps:
establishing (301, 401) a binding relationship between the electronic device and the household electrical appliance, according to an identity of the electronic device and an identity of the household electrical appliance, wherein the identity of the household electrical appliance is determined by the electronic device according to a two-dimensional code identity;
detecting (102), at the household electrical appliance that a self-operation status is abnormal;
in response to detecting that the operation status is abnormal, switching (104) a current operation mode of the household electrical appliance into a safe mode;
operating (106) in the safe mode, the safe mode comprising at least one of powering off a motor in the household electrical appliance, and stopping rotation of a fan in the household electrical appliance;
sending (108) abnormality information to the bound electronic device, the bound electronic device being configured to display the abnormality information on a display interface of the bound electronic device, and the abnormality information comprising at least one of an abnormality position, an abnormality problem, abnormality time and an abnormality picture;
detecting (408), at the household electrical appliance, that the abnormality problem prompted by the abnormality information is solved;
in response to detecting that the abnormality problem prompted by the abnormality information is solved, sending (409) abnormality recovery information to the bound electronic device, the bound electronic device being configured to display the abnormality recovery information on the display interface of the bound electronic device;
receiving (413), at the household electrical appliance, an operation recovery signal from the bound electronic device, wherein the household electrical appliance only accepts an operation recovery signal sent by the bound electronic device; and
recovering (414) the operation at the abnormality position according to the operation recovery signal.

2. The method according to claim 1, wherein, the steps of detecting (102) whether a self-operation status is abnormal comprises:
detecting whether a door is opened; and if the door is opened, determining that the household electrical appliance is abnormal;
and/or,
detecting whether a foreign object exists; and if the foreign object exists, determining that the household electrical appliance is abnormal;
and/or,
detecting whether a normal operation is obstructed by an external force; and if the external force is larger than a first threshold, determining that the household electrical appliance is abnormal.

3. The method according to any one of claims 1 or 2, wherein the method further comprises:
uploading (415) the abnormality information to a server, the server being configured to make statistics of the abnormality information.

4. The method according to any one of claims 1 or 2, wherein, the step of sending the abnormality information to the bound electronic device comprises:
sending the abnormality information to the bound electronic device through a wireless connection established with the bound electronic device;
or,
sending, through a gateway device, the abnormality information to the electronic device belonging to the same LAN with the household electrical appliance;
or,
sending the abnormality information to the bound electronic device through internet.

5. A method for mode switching an electronic device, **characterized in that** the method comprises the steps of:
the electronic device establishing (301, 401) a binding relationship with a household electrical appliance, according to an identity of the electronic device and an identity of the household electrical appliance, wherein the identity of the household electrical appliance is determined by the electronic device according to a two-dimensional code identity;
the bound electronic device receiving (202) abnormality information sent by the method of claim 1, the abnormality information being sent by the household electrical appliance after the household electrical appliance detects that a self-operation status of the household electrical appliance is abnormal;
the bound electronic device displaying (204) the abnormality information on a display interface of the bound electronic device, the abnormality information comprising at least one of an abnormality position, an abnormality problem, abnormality time and an abnormality picture;
the bound electronic device receiving (410) abnormality recovery information sent by the household electrical appliance, the abnormality recovery information being sent by the household electrical appliance after the household electrical appliance detects that the abnormality problem is solved;
displaying (411) the abnormality recovery information on the display interface of the bound electronic device; and
the bound electronic device sending (412) an operation recovery signal to the household electrical appliance, the operation recovery signal being configured to instruct the household electrical appliance to recover the operation at the abnormality position, wherein the household electrical appliance only accepts an operation recovery signal sent by the bound electronic device.

6. The method according to claim 5, wherein, the steps of displaying (204) the abnormality information on a display interface of the bound electronic device comprises:
when the abnormality position in the abnormality information is displayed in a block diagram of the household electrical appliance, distinctively displaying the abnormality position and other positions in the block diagram of the household electrical appliance, the distinctive display comprising at least one of distinctive display via colors, distinctive display via animations and distinctive display via profiles.

7. The method according to any one of claims 5 or 6, wherein, the step of receiving (202) the abnormality information sent by the household electrical appliance comprises:
receiving the abnormality information sent by the household electrical appliance through a wireless connection established with the household electrical appliance;
or,
receiving, through a gateway device, the abnormality information sent by the household electrical appliance belonging to the same LAN with the bound electronic device;
or,
receiving the abnormality information sent by the household electrical appliance through internet.

8. A system comprising:
a household electrical appliance; and
an electronic device,
**characterized in that** the household electrical appliance comprises:
a first binding module configured to establish a binding relationship with the electronic device, according to an identity of the electronic device and an identity of the household electrical appliance, wherein the identity of the household electrical appliance is determined by the electronic device according to a two-dimensional code identity;
a first detection module (520, 610) configured to detect that a self-operation status is abnormal;
a mode switching module (540, 620) configured to, when the operation status is abnormal, switch a current operation mode into a safe mode;
a mode operating module (560, 630) configured to operate in the safe mode, the safe mode comprising at least one of powering off a motor in the household electrical appliance, and stopping rotation of a fan in the household electrical appliance; and
a first sending module (580, 640) configured to, when the household electrical appliance is connected with the bound electronic device, send abnormality information to the bound electronic device for display of the abnormality information on a display interface of the bound electronic device, and the abnormality information comprising at least one of an abnormality position, an abnormality problem, abnormality time and an abnormality picture;
a second detecting module (520, 610) configured to detect that the abnormality problem prompted by the abnormality information is solved;
a second sending module (570, 640) configured to, in response to detecting that the abnormality problem prompted by the abnormality information is solved, send abnormality recovery information to the bound electronic device for display of the abnormality recovery information on the display interface of the bound electronic device;
a signal receiving module (670) configured to receive an operation recovery signal, from the bound electronic device, wherein the household electrical appliance only accepts an operation recovery signal sent by the bound electronic device; and
an operation recovery module (680) configured to recover the operation at the abnormality position according to the operation recovery signal;
and wherein the electronic device comprises:
a second binding module configured to establish a binding relationship with the first binding module of the household electrical appliance, according to an identity of the electronic device and an identity of the household electrical appliance, wherein the identity of the household electrical appliance is determined by the electronic device according to the two-dimensional code identity;
a first receiving module (720, 810) configured to receive abnormality information sent by the household electrical appliance, the abnormality information being sent by the household electrical appliance after the household electrical appliance detects that a self-operation status of the household electrical appliance is abnormal; and
a first display module (740, 820) configured to display the abnormality information on a display interface of the bound electronic device, the abnormality information comprising at least one of an abnormality position, an abnormality problem, abnormality time and an abnormality picture;
a second receiving module (830) configured to receive abnormality recovery information sent by the household electrical appliance, the abnormality recovery information being sent by the household electrical appliance after the household electrical appliance detects that the abnormality problem is solved;
a second display module (840) configured to display the abnormality recovery information on the display interface of the bound electronic device; and
a third sending module (850) configured to send the operation recovery signal to the household electrical appliance, the operation recovery signal being configured to instruct the household electrical appliance to recover the operation at the abnormality position, wherein the household electrical appliance only accepts an operation recovery signal sent by the bound electronic device.

## Patentansprüche

1. Verfahren zur Modusumschaltung in einem Elektrohaushaltsgerät, das mit einem elektronischen Gerät verbunden ist, **dadurch gekennzeichnet, dass** das Verfahren die folgenden Schritte beinhaltet:
Herstellen (301, 401) einer Bindungsbeziehung zwischen dem elektronischen Gerät und dem Elektrohaushaltsgerät gemäß einer Identität des elektronischen Geräts und einer Identität des Elektrohaushaltsgeräts, wobei die Identität des Elektrohaushaltsgeräts durch das elektronische Gerät gemäß einer zweidimensionalen Code-Identität bestimmt wird;
Erkennen (102) an dem Elektrohaushaltsgerät, dass ein Selbstbetriebszustand anormal ist;
Umschalten (104), als Reaktion auf die Erkennung, dass der Betriebszustand anormal ist, eines aktuellen Betriebsmodus des Elektrohaushaltsgeräts in einen sicheren Modus;
Arbeiten (106) im sicheren Modus, wobei der sichere Modus das Abschalten eines Motors in dem Elektrohaushaltsgerät und/oder das Stoppen der Rotation eines Lüfters in dem Elektrohaushaltsgerät beinhaltet;
Senden (108) von Anomalitätsinformationen zu dem gebundenen elektronischen Gerät, wobei das gebundene elektronische Gerät zum Anzeigen der Anomalitätsinformationen auf einer Anzeigeschnittstelle des gebundenen elektronischen Geräts konfiguriert ist und die Anomalitätsinformationen mindestens eines von einer Anomalitätsposition, einem Anomalitätsproblem, einer Anomalitätszeit und einem Anomalitätsbild umfassen;
Erkennen (408), an dem Elektrohaushaltsgerät, dass das durch die Anomalitätsinformationen veranlasste Anomalitätsproblem gelöst ist;
Senden (409), als Reaktion auf die Erkennung, dass das durch die Anomalitätsinformationen ausgelöste Anomalitätsproblem gelöst ist, von Anomalitätswiederherstellungsinformationen zu dem gebundenen elektronischen Gerät, wobei das gebundene elektronische Gerät zum Anzeigen der Anomalitätswiederherstellungsinformationen auf der Anzeigeschnittstelle des gebundenen elektronischen Geräts konfiguriert ist;
Empfangen (413), an dem Elektrohaushaltsgerät, eines Betriebswiederherstellungssignals von dem gebundenen elektronischen Gerät, wobei das Elektrohaushaltsgerät nur ein von dem gebundenen elektronischen Gerät gesendetes Betriebswiederherstellungssignal akzeptiert; und
Wiederherstellen (414) des Betriebs an der Anormalitätsposition gemäß dem Betriebswiederherstellungssignal.

2. Verfahren nach Anspruch 1, wobei die Schritte des Erkennens (102), ob ein Selbstbetriebszustand anormal ist, Folgendes beinhalten:
Erkennen, ob eine Tür geöffnet ist; und Feststellen, wenn die Tür geöffnet ist, dass das Elektrohaushaltsgerät anormal ist; und/oder
Erkennen, ob ein Fremdkörper vorhanden ist; und Feststellen, wenn ein Fremdkörper vorhanden ist, dass das Elektrohaushaltsgerät anormal ist; und/oder
Erkennen, ob ein normaler Betrieb durch eine äußere Kraft behindert wird; und Feststellen, wenn die äußere Kraft größer als ein erster Schwellenwert ist, dass das Elektrohaushaltsgerät anormal ist.

3. Verfahren nach Anspruch 1 oder 2, wobei das Verfahren ferner Folgendes beinhaltet: Hochladen (415) der Anormalitätsinformationen auf einen Server, wobei der Server zum Erstellen von Statistiken über die Anormalitätsinformationen konfiguriert ist.

4. Verfahren nach Anspruch 1 oder 2, wobei der Schritt des Sendens der Anormalitätsinformationen zu dem gebundenen elektronischen Gerät Folgendes beinhaltet:
Senden der Anormalitätsinformationen zu dem gebundenen elektronischen Gerät über eine mit dem gebundenen elektronischen Gerät hergestellte drahtlose Verbindung;
oder
Senden, über ein Gateway-Gerät, der Anormalitätsinformationen zu dem elektronischen Gerät, das zum selben LAN gehört wie das Elektrohaushaltsgerät;
oder
Senden der Anormalitätsinformationen zu dem gebundenen elektronischen Gerät über das Internet.

5. Verfahren zum Modusumschalten eines elektronischen Geräts, **dadurch gekennzeichnet, dass** das Verfahren die folgenden Schritte beinhaltet:
Herstellen (301, 401), durch das elektronische Gerät, einer Bindungsbeziehung mit einem Elektrohaushaltsgerät gemäß einer Identität des elektronischen Geräts und einer Identität des Elektrohaushaltsgeräts, wobei die Identität des Elektrohaushaltsgeräts durch das elektronische Gerät gemäß einer zweidimensionalen Code-Identität bestimmt wird;
Empfangen (202), durch das gebundene elektronische Gerät, von mit dem Verfahren nach Anspruch 1 gesendeten Anomalitätsinformationen, wobei die Anomalitätsinformationen von dem Elektrohaushaltsgerät gesendet werden, nachdem das Elektrohaushaltsgerät erkannt hat, dass ein Selbstbetriebszustand des Elektrohaushaltsgeräts anormal ist;
Anzeigen (204), durch das gebundene elektronische Gerät, der Anomalitätsinformationen auf einer Anzeigeschnittstelle des gebundenen elektronischen Geräts, wobei die Anomalitätsinformationen mindestens eines von einer Anomalitätsposition, einem Anomalitätsproblem, einer Anomalitätszeit und einem Anomalitätsbild umfassen;
Empfangen (410), durch das gebundene elektronische Gerät, von von dem Elektrohaushaltsgerät gesendeten Anormalitätswiederherstellungsinformationen, wobei die Anormalitätswiederherstellungsinformationen von dem Elektrohaushaltsgerät gesendet werden, nachdem das Elektrohaushaltsgerät erkannt hat, dass das Anormalitätsproblem gelöst ist;
Anzeigen (411) der Anormalitätswiederherstellungsinformation auf der Anzeigeschnittstelle des gebundenen elektronischen Geräts; und
Senden (412), durch das gebundene elektronische Gerät, eines Betriebswiederherstellungssignals zu dem Elektrohaushaltsgerät, wobei das Betriebswiederherstellungssignal zum Anweisen des Elektrohaushaltsgeräts zum Wiederherstellen des Betriebs an der Anormalitätsposition konfiguriert ist, wobei das Elektrohaushaltsgerät nur ein von dem gebundenen elektronischen Gerät gesendetes Betriebswiederherstellungssignal akzeptiert.

6. Verfahren nach Anspruch 5, wobei die Schritte des Anzeigens (204) der Anomalitätsinformationen auf einer Anzeigeschnittstelle des gebundenen elektronischen Geräts Folgendes beinhalten:
unterscheidbares Anzeigen, wenn die Anormalitätsposition in den Anormalitätsinformationen in einem Blockdiagramm des Elektrohaushaltsgeräts angezeigt wird, der Anormalitätsposition und anderer Positionen in dem Blockdiagramm des Elektrohaushaltsgeräts, wobei die unterscheidbare Anzeige mindestens eines von unterscheidbarer Anzeige über Farben, unterscheidbarer Anzeige über Animationen und unterscheidbarer Anzeige über Profile umfasst.

7. Verfahren nach Anspruch 5 oder 6, wobei der Schritt des Empfangens (202) der von dem Elektrohaushaltsgerät gesendeten Anomalitätsinformationen Folgendes beinhaltet:
Empfangen der von dem Elektrohaushaltsgerät gesendeten Anormalitätsinformationen über eine mit dem Elektrohaushaltsgerät hergestellte drahtlose Verbindung;
oder
Empfangen, über ein Gateway-Gerät, der von dem Elektrohaushaltsgerät, das zum selben LAN wie das gebundene elektronische Gerät gehört, gesendeten Anormalitätsinformationen;
oder
Empfangen der von dem Elektrohaushaltsgerät über das Internet gesendeten Anormalitätsinformationen.

8. System, das Folgendes umfasst:
ein Elektrohaushaltsgerät; und
ein elektronisches Gerät, **dadurch gekennzeichnet, dass** das Elektrohaushaltsgerät Folgendes umfasst:
ein erstes Bindungsmodul, konfiguriert zum Herstellen einer Bindungsbeziehung mit dem elektronischen Gerät gemäß einer Identität des elektronischen Geräts und einer Identität des Elektrohaushaltsgeräts, wobei die Identität des Elektrohaushaltsgeräts durch das elektronische Gerät gemäß einer zweidimensionalen Code-Identität bestimmt wird;
ein erstes Erkennungsmodul (520, 610), konfiguriert zum Erkennen, dass ein Selbstbetriebszustand anormal ist;
ein Modusumschaltmodul (540, 620), konfiguriert zum Umschalten, wenn der Betriebszustand anormal ist, eines aktuellen Betriebsmodus in einen sicheren Modus;
ein Modusbetriebsmodul (560, 630), konfiguriert zum Arbeiten in dem sicheren Modus, wobei der sichere Modus das Abschalten eines Motors in dem Elektrohaushaltsgerät und/oder das Stoppen der Rotation eines Lüfters in dem Elektrohaushaltsgerät umfasst; und
ein erstes Sendemodul (580, 640), konfiguriert zum Senden, wenn das Elektrohaushaltsgerät mit dem gebundenen elektronischen Gerät verbunden ist, von Anomalitätsinformationen zu dem gebundenen elektronischen Gerät, um die Anomalitätsinformationen auf einer Anzeigeschnittstelle des gebundenen elektronischen Geräts anzuzeigen, und wobei die Anomalitätsinformationen mindestens eines von einer Anomalitätsposition, einem Anomalitätsproblem, einer Anomalitätszeit und einem Anomalitätsbild umfassen;
ein zweites Erkennungsmodul (520, 610), konfiguriert zum Erkennen, dass das durch die Anomalitätsinformationen ausgelöste Anomalitätsproblem gelöst ist;
ein zweites Sendemodul (570, 640), konfiguriert zum Senden, als Reaktion auf das Erkennen, dass das durch die Anomalitätsinformationen ausgelöste Anomalitätsproblem gelöst ist, von Anomalitätswiederherstellungsinformationen zu dem gebundenen elektronischen Gerät zum Anzeigen der Anomalitätswiederherstellungsinformationen auf der Anzeigeschnittstelle des gebundenen elektronischen Geräts;
ein Signalempfangsmodul (670), konfiguriert zum Empfangen eines Betriebswiederherstellungssignals von dem gebundenen elektronischen Gerät, wobei das Elektrohaushaltsgerät nur ein von dem gebundenen elektronischen Gerät gesendetes Betriebswiederherstellungssignal akzeptiert; und
ein Betriebswiederherstellungsmodul (680), konfiguriert zum Wiederherstellen des Betriebs an der Anormalitätsposition gemäß dem Betriebswiederherstellungssignal;
und wobei das elektronische Gerät Folgendes umfasst:
ein zweites Bindungsmodul, konfiguriert zum Herstellen einer Bindungsbeziehung mit dem ersten Bindungsmodul des Elektrohaushaltsgeräts gemäß einer Identität des elektronischen Geräts und einer Identität des Elektrohaushaltsgeräts, wobei die Identität des Elektrohaushaltsgeräts durch das elektronische Gerät gemäß der zweidimensionalen Code-Identität bestimmt wird;
ein erstes Empfangsmodul (720, 810), konfiguriert zum Empfangen von von dem Elektrohaushaltsgerät gesendeten Anomalitätsinformationen, wobei die Anomalitätsinformationen von dem Elektrohaushaltsgerät gesendet werden, nachdem das Elektrohaushaltsgerät erkannt hat, dass ein Selbstbetriebszustand des Elektrohaushaltsgeräts anormal ist; und
ein erstes Anzeigemodul (740, 820), konfiguriert zum Anzeigen der Anomalitätsinformationen auf einer Anzeigeschnittstelle des gebundenen elektronischen Geräts, wobei die Anomalitätsinformationen mindestens eines von einer Anomalitätsposition, einem Anomalitätsproblem, einer Anomalitätszeit und einem Anomalitätsbild umfassen;
ein zweites Empfangsmodul (830), konfiguriert zum Empfangen von von dem Elektrohaushaltsgerät gesendeten Anomalitätswiederherstellungsinformationen, wobei die Anomalitätswiederherstellungsinformationen von dem Elektrohaushaltsgerät gesendet werden, nachdem das Elektrohaushaltsgerät erkannt hat, dass das Anomalitätsproblem gelöst ist;
ein zweites Anzeigemodul (840), konfiguriert zum Anzeigen der Anomalitätswiederherstellungsinformationen auf der Anzeigeschnittstelle des gebundenen elektronischen Geräts; und
ein drittes Sendemodul (850), konfiguriert zum Senden des Betriebswiederherstellungssignals zu dem Elektrohaushaltsgerät, wobei das Betriebswiederherstellungssignal zum Anweisen des Elektrohaushaltsgeräts zum Wiederherstellen des Betriebs an der Anormalitätsposition konfiguriert ist, wobei das Elektrohaushaltsgerät nur ein von dem gebundenen elektronischen Gerät gesendetes Betriebswiederherstellungssignal akzeptiert.

## Revendications

1. Procédé de commutation de mode dans un appareil électrique ménager connecté à un dispositif électronique, **caractérisé en ce que** le procédé comprend les étapes suivantes :
établir (301, 401) une relation de liaison entre le dispositif électronique et l'appareil électrique ménager, conformément à une identité du dispositif électronique et à une identité de l'appareil électrique ménager, dans lequel l'identité de l'appareil électrique ménager est déterminée par le dispositif électronique conformément à une identité de code bidimensionnel ;
détecter (102), à l'appareil électrique ménager qu'un état de fonctionnement autonome est anormal ;
en réponse au fait de détecter que l'état de fonctionnement est anormal, commuter (104) un mode de fonctionnement courant de l'appareil électrique ménager dans un mode de sûreté ;
faire fonctionner (106) dans le mode de sûreté, le mode de sûreté comprenant au moins l'un d'entre couper un moteur dans l'appareil électrique ménager et arrêter la rotation d'un ventilateur dans l'appareil électrique ménager ;
envoyer (108) une information d'anomalie au dispositif électronique lié, le dispositif électronique lié étant configuré pour afficher l'information d'anomalie sur une interface d'affichage du dispositif électronique lié, et l'information d'anomalie comprenant au moins l'un d'entre une position d'anomalie, un problème d'anomalie, une heure d'anomalie et une image d'anomalie ;
détecter (408), à l'appareil électrique ménager, que le problème d'anomalie suggéré par l'information d'anomalie est résolu ;
en réponse au fait de détecter que le problème d'anomalie suggéré par l'information d'anomalie est résolu, envoyer (409) une information de rétablissement d'anomalie au dispositif électronique lié, le dispositif électronique lié étant configuré pour afficher l'information de rétablissement d'anomalie sur l'interface d'affichage du dispositif électronique lié ;
recevoir (413), à l'appareil électrique ménager, un signal de rétablissement de fonctionnement du dispositif électronique lié, dans lequel l'appareil électrique ménager accepte uniquement un signal de rétablissement de fonctionnement envoyé par le dispositif électronique lié ; et
rétablir (414) le fonctionnement à la position d'anomalie conformément au signal de rétablissement d'anomalie.

2. Procédé selon la revendication 1, dans lequel, l'étape consistant à détecter (102) si un état de fonctionnement autonome est anormal comprend :
détecter si une porte est ouverte ; et si la porte est ouverte, déterminer que l'appareil électrique ménager est anormal ;
et/ou
détecter si un objet étranger existe ; et si un objet étranger existe, déterminer que l'appareil électrique ménager est anormal ;
et/ou
détecter si un fonctionnement normal est obstrué par une force extérieure ; et si la force extérieure est plus grande qu'un premier seuil, déterminer que l'appareil électrique ménager est anormal.

3. Procédé selon l'une quelconque des revendications 1 ou 2, où le procédé comprend en outre :
charger (415) l'information d'anomalie à un serveur, le serveur étant configuré pour faire une statistique de l'information d'anomalie.

4. Procédé selon l'une quelconque des revendications 1 ou 2, dans lequel l'étape consistant à envoyer l'information d'anomalie au dispositif électronique lié comprend :
envoyer l'information d'anomalie au dispositif électronique lié par une connexion sans fil établie avec le dispositif électronique lié ;
ou bien
envoyer, par un dispositif passerelle, l'information d'anomalie au dispositif électronique appartenant au même réseau local que l'appareil électrique ménager ;
ou bien
envoyer l'information d'anomalie au dispositif électronique lié par l'Internet.

5. Procédé de commutation de mode d'un dispositif électronique, **caractérisé en ce que** le procédé comprend les étapes consistant à :
établir par le dispositif électronique (301, 401) une relation de liaison avec un appareil électrique ménager, conformément à une identité du dispositif électronique et à une identité de l'appareil électrique ménager, dans lequel l'identité de l'appareil électrique ménager est déterminée par le dispositif électronique conformément à une identité de code bidimensionnel ;
recevoir par le dispositif électronique lié (202) une information d'anomalie envoyée par le procédé selon la revendication 1, l'information d'anomalie étant envoyée par l'appareil électrique ménager après que l'appareil électrique ménager a détecté qu'un état de fonctionnement autonome de l'appareil électrique ménager est anormal ;
afficher par le dispositif électronique lié (204) l'information d'anomalie sur une interface d'affichage du dispositif électronique lié, l'information d'anomalie comprenant au moins l'un d'entre une position d'anomalie, un problème d'anomalie, une heure d'anomalie et une image d'anomalie ;
recevoir par l'appareil électronique lié (410), une information de rétablissement d'anomalie envoyée par l'appareil électrique ménager, l'information de rétablissement d'anomalie étant envoyée par l'appareil électrique ménager après que l'appareil électrique ménager a détecté que le problème d'anomalie est résolu ;
afficher (411) l'information de rétablissement d'anomalie sur l'interface d'affichage du dispositif électronique lié ; et
envoyer par le dispositif électronique lié (412) un signal de rétablissement de fonctionnement à l'appareil électrique ménager, le signal de rétablissement de fonctionnement étant configuré pour donner à l'appareil électrique ménager l'instruction de rétablir le fonctionnement à la position d'anomalie, dans lequel l'appareil électrique ménager accepte uniquement un signal de rétablissement de fonctionnement envoyé par le dispositif électronique lié.

6. Procédé selon la revendication 5, dans lequel, l'étape consistant à afficher (204) l'information d'anomalie sur une interface d'affichage du dispositif électronique lié comprend :
lorsque la position d'anomalie dans l'information d'anomalie est affichée dans un bloc-diagramme de l'appareil électrique ménager, affichant distinctement la position d'anomalie et d'autres positions dans le bloc-diagramme de l'appareil électrique ménager, l'affichage distinct comprenant au moins l'un d'entre un affichage distinct via des couleurs, un affichage distinct via des animations et un affichage distinct via des profils.

7. Procédé selon l'une quelconque des revendications 5 ou 6, dans lequel, l'étape consistant à recevoir (202) l'information d'anomalie envoyée par l'appareil électrique ménager comprend :
recevoir l'information d'anomalie envoyée par l'appareil électrique ménager par une connexion sans fil établie avec l'appareil électrique ménager ;
ou bien
recevoir, par un dispositif passerelle, l'information d'anomalie envoyée par l'appareil électrique ménager appartenant au même réseau local que le dispositif électronique lié ;
ou bien
recevoir l'information d'anomalie envoyée par l'appareil électrique ménager par l'Internet.

8. Système comprenant :
un appareil électrique ménager ; et
un dispositif électronique,
**caractérisé en ce que** l'appareil électrique ménager comprend :
un premier module de liaison configuré pour établir une relation de liaison avec le dispositif électronique, conformément à une identité du dispositif électronique et à une identité de l'appareil électrique ménager, dans lequel l'identité de l'appareil électrique ménager est déterminée par le dispositif électronique conformément à une identité de code bidimensionnel ;
un premier module de détection (520, 610) configuré pour détecter qu'un état de fonctionnement autonome est anormal ;
un module de commutation (540, 620) configuré pour commuter, lorsque l'état de fonctionnement est anormal, un mode de fonctionnement courant dans un mode de sûreté ;
un module de fonctionnement de mode (560, 630) configuré pour fonctionner dans le mode de sûreté, le mode de sûreté comprenant au moins l'un d'entre couper un moteur dans l'appareil électrique ménager et arrêter la rotation d'un ventilateur dans l'appareil électrique ménager ; et
un premier module d'envoi (580, 640) configuré pour envoyer, lorsque l'appareil électrique ménager est connecté au dispositif électronique lié, une information d'anomalie au dispositif électronique lié pour afficher l'information d'anomalie sur une interface d'affichage du dispositif électronique lié, et l'information d'anomalie comprenant au moins l'un d'entre une position d'anomalie, un problème d'anomalie, une heure d'anomalie et une image d'anomalie ;
un deuxième module de détection (520, 610) configuré pour détecter que le problème d'anomalie suggéré par l'information d'anomalie est résolu ;
un deuxième module d'envoi (570, 640) configuré pour envoyer, en réponse au fait de détecter que le problème d'anomalie suggéré par l'information d'anomalie est résolu, une information de rétablissement d'anomalie au dispositif électronique lié pour afficher l'information de rétablissement d'anomalie sur l'interface d'affichage du dispositif électronique lié ;
un module de réception de signal (670) configuré pour recevoir un signal de rétablissement de fonctionnement du dispositif électronique lié, dans lequel l'appareil électrique ménager accepte uniquement un signal de rétablissement de fonctionnement envoyé par le dispositif électronique lié ; et
un module de rétablissement de fonctionnement (680) configuré pour rétablir le fonctionnement à la position d'anomalie conformément au signal de rétablissement d'anomalie ;
et dans lequel le dispositif électronique comprend :
un deuxième module de liaison configuré pour établir une relation de liaison avec le premier module de liaison de l'appareil électrique ménager, conformément à une identité du dispositif électronique et à une identité de l'appareil électrique ménager, dans lequel l'identité de l'appareil électrique ménager est déterminée par le dispositif électronique conformément à l'identité de code bidimensionnel ;
un premier module de réception (720, 810) configuré pour recevoir l'information d'anomalie envoyée par l'appareil électrique ménager, l'information d'anomalie étant envoyée par l'appareil électrique ménager après que l'appareil électrique ménager a détecté qu'un état de fonctionnement autonome de l'appareil électrique ménager est anormal ; et
un premier module d'affichage (740, 820) configuré pour afficher l'information d'anomalie sur une interface d'affichage du dispositif électronique lié, l'information d'anomalie comprenant au moins l'un d'entre une position d'anomalie, un problème d'anomalie, une heure d'anomalie et un image d'anomalie ;
un deuxième module de réception (830) configuré pour recevoir une information de rétablissement d'anomalie envoyée par l'appareil électrique ménager, l'information de rétablissement d'anomalie étant envoyée par l'appareil électrique ménager après que l'appareil électrique ménager a détecté que le problème d'anomalie est résolu ;
un deuxième module d'affichage (840) configuré pour afficher l'information de rétablissement d'anomalie sur l'interface d'affichage du dispositif électronique lié ; et
un troisième module d'envoi (850) configuré pour envoyer le signal de rétablissement de fonctionnement à l'appareil électrique ménager, le signal de rétablissement de fonctionnement étant configuré pour donner à l'appareil électrique ménager l'instruction de rétablir le fonctionnement à la position d'anomalie, dans lequel l'appareil électrique ménager accepte uniquement un signal de rétablissement de fonctionnement envoyé par le dispositif électronique lié.
